# EUROPEAN PATENT APPLICATION

(11) **EP 4 488 778 A1**
(43) Date of publication of application: **08.01.2025**
(21) Application number: 23183060.5
(22) Date of filing: 03.07.2023
(51) Int. Cl.: G05B 19/418

(54) **SYSTEM AND METHOD FOR MONITORING OR CONTROLLING AN ASSET OF AN INDUSTRIAL AUTOMATION ENVIRONMENT**

(71) Applicant: Siemens Aktiengesellschaft, 80333 München (DE)
(72) Inventor: Kob, Peter, 90562 Heroldsberg (DE)
(74) Representative: Siemens Patent Attorneys

(57) **Abstract**

The invention relates to a system and a method for monitoring or controlling an Asset of an industrial automation environment, wherein the Asset is communicatively coupled with at least one Digital Twin, the Digital Twin receiving Value properties about values of the Asset and transmitting desired set points to the Asset. A polling-based or bi-directional communication between the Asset and the at least one Digital Twin is at least partly routed via an Asset Twin, the Asset Twin being a service located in the industrial automation environment, the Asset Twin receiving Values from the Asset and forwarding these Values to the at least one Digital Twin, and the Asset Twin receiving SetPoints or desired Values from the at least one Digital Twin, checking these SetPoints or desired Values for access rights and/or consistency with other Values, SetPoints and/or properties of the Asset, and applying these desired Values or SetPoints to the Asset. With this, controlled access from the Digital Twin to the Asset is possible, even in firewalled setups of the Digital Twin. The Asset, e.g., a PLC, can be influenced even by external Digital Twins during runtime.

## Description

The invention relates to a method for monitoring or controlling an Asset of an industrial automation environment according to the preamble of patent claim 1, and to a system for monitoring or controlling an Asset of an industrial automation environment according to the preamble of patent claim 12.

A Digital Twin is a virtual representation that serves as the real-time digital counterpart of a physical object or process (in the following disclosure called "Asset"). "A Digital Twin also can be used for monitoring, diagnostics and prognostics to optimize Asset performance and utilization" (from Wikipedia - https://en.wikipedia.org/wiki/Digital_twin). Usually, a Digital Twin is restricted to a representation to certain aspects, properties or functions, so-called facets, of an Asset. A typical example is a CAD drawing of an equipment or the actual status of a machine. For this disclosure we do not focus on the specific aspects.

Recently Digital Twins have been expanded with the capabilities that one can interact with the Digital Twin in a command like fashion. However, the Digital Twin is mostly considered as a representation of a real object, and in this respect read operations and more general all operations are done in the Twin-side of an Asset.

In our focus of the Digital Twin, it is less a Digital Twin but rather a digital shadow. The invention focuses more on the fact that the Asset and the related Digital Twin are two things which can interact with each other.

The issue is that there usually is no bidirectional communication - only asymmetric transfer of Values and commands/SetPoints which means:
- On the Asset, there is no access on what is happening on the twin side. E.g., if there is some postprocessing or setting of Values, these are not accessible from the Asset side directly.
- There is no possibility of issuing commands from the Digital Twin to the Asset side.

These problems often occur because direct access is often forbidden or restricted for security reasons from the area where the Asset is (e.g., shopfloor area, industrial automation environment) to the site where the twin exists (e.g., cloud, Internet) - and especially vice versa::
- The Asset (e.g., a plc - programmable logic controller) is logically or physically located on a shop floor or otherwise restricted site, so that there is no direct connectivity with e.g., HTML based access. This usually happens when firewalls are configured to prohibit direct access to the internet from the shopfloor via the production network (industrial automation network) or vice versa.
- The internet is physically not accessible because of e.g., network outage or because a dial-up connection is used (may be of bandwidth or cost reasons or if there is no connectivity e.g., on a ship).

Currently the problem is solved by using a Web (HTTP) connection via e.g., REST-API to the Twin provider (REST: REpresentational State Transfer).

As already stated above, security settings usually limit what can and should be visible from the Asset side to the Digital Twin side - or vice versa. The connectivity between the Asset and the Digital Twin is usually tailored to IoT data flow requirements. Therefore, the firewall checks or controls data traffic between source and destination. Access from browsers is usually inhibited.

It is a task of the instant invention to improve and better control data access between an Asset and its Digital Twin and to provide a communication framework for new services which demand comprehensive writing access from the Digital Twin to the Asset.

For the solution for this task, we establish a bi-directional communication between the Asset and the Digital Twin. That bidirectional communication can be indirectly via already established IoT connectivity or specially initiated from the Asset or the twin side. This connectivity is not part of this disclosure. In essence we create a twin of the twin, so so-called Asset Twin. In the figure below the "Asset Twin". This makes it possible to interact in the following ways:
- We allow to set "Asset Values" on the Asset Twin - this allows to set desired Values (e.g., parameters, setpoints, function-calls etc.) not only on the "Digital Twin" side but also on the "Asset Twin" side.
- Instead of simply send reported properties from the Asset to the Digital Twin, we also report "twin properties" from the "twin" side to the Asset side.
- We allow to set "twin properties" on both sides.
- All interactions on the "Asset Twin" side can be done either via human users (e.g., using a Web based UI or from the Asset or from other Assets or users (machine users or "computer-based entities")) on the Asset side (usually a shop floor).

In particular, the problem is solved by the method according to claim 1 and the system according to claim 12.

The solution comprises a method for monitoring or controlling an Asset of an industrial automation environment, wherein the Asset is communicatively coupled with at least one Digital Twin, the Digital Twin receiving Value properties about Values of the Asset and transmitting desired set points to the Asset. In this method, a bi-directional communication between the Asset and the at least one Digital Twin is at least partly routed via an Asset Twin, the Asset Twin being a service located in the industrial automation environment, the Asset Twin receiving Values from the Asset and forwarding these Values to the at least one Digital Twin, and the Asset Twin receiving SetPoints or desired Values from the at least one Digital Twin, checking these SetPoints or desired Values for access rights and/or consistency with other Values, SetPoints and/or properties of the Asset, and applying these desired Values or SetPoints to the Asset. With this, controlled access from the Digital Twin to the Asset is possible, even in firewalled setups of the Digital Twin. The Asset, e.g., a PLC, can be influenced even by external Digital Twins during runtime.

The problem is also solved by a system for monitoring or controlling an Asset of an industrial automation environment, wherein the Asset is communicatively coupled with at least one Digital Twin, and the Digital Twin being setup for receiving Value properties about Values of the Asset and transmitting desired set points to the Asset. The system comprises a bi-directional communication channel between the Asset and the at least one Digital Twin, the communication channel being at least partly routed via an Asset Twin, the Asset Twin being a service located in the industrial automation environment, the Asset Twin being setup for receiving Values from the Asset and for forwarding these Values to the at least one Digital Twin, and the Asset Twin being setup for receiving SetPoints or desired Values from the at least one Digital Twin, for checking these SetPoints or desired Values for access rights and consistency with other Values, SetPoints and/or properties and/or functions of the Asset and being setup for applying these desired Values or SetPoints to the Asset. The data communication may also be based on a polling-based communication protocol, in particular initiated by the Asset Twin. With this system, the advantages connected with the inventive method can be achieved.

Advantageous embodiments of the invention are given in the depended claims. Features of embodiments of the method are also applicable to the inventive system, and vice versa. Several advantageous embodiments can be combined in a senseful manner.

In an embodiment, it is possible to connect multiple Digital Twins with the Asset via the common Asset Twin. The multiple Digital Twins can at least partly have each different purposes or different facets. So, it is possible, to connect a system of different Digital Twins for one Asset, covering a better bandwidth of functionality, without having the Asset be adapted for multiple Digital Twin connections.

In a further embodiment, the method and system comprise establishing the at least one Digital Twin in an external environment, for example (but not limited to) a cloud, the Internet, company local Datacenters, or web servers, the industrial automation environment being protected by a firewall in respect to the external environment. Thus, the industrial environment can so be protected even in case an external Digital Twin has access to it.

In an embodiment, in case of concurring, conflicting or simultaneous access on both the Asset Twin and the at least one Digital Twin regarding the same Value, SetPoint, parameter or function of the Asset, the access via the Asset Twin is prioritized. Additionally, or in an alternative solution, the method and system is adapted for employing or establishing a policy engine for or in the Asset Twin for rule-based access conflict resolution.

In a further embodiment, the method and system comprise checking, by the Asset Twin, authorization of the at least one Digital Twin or other users or entities for permission of access to Values, SetPoints, parameters or functions of the Asset ("user-identity based authorization").

Additionally, or alternatively, the Asset Twin can control access via an access privilege protocol. The access privilege protocol can be based on user role definitions or a user or computer-based identity, the identity being connected with specific access rights.

For fast and comprehensive data access, the Asset Twin can directly access the Asset via an industrial communication protocol and industrial data bus systems, such as OPC/UA, Profinet, Industrial Ethernet, or the like.

An example of the invention is shown in the drawing. In the drawing,
- Fig. 1: shows an abstracted view of Asset access according to the state of the art,
- Fig. 2: shows an abstracted view of an inventive system, and
- Fig. 3: shows an example table with conflict resolution rules during synchronization of concurring access of the Digital Twin and an local entity to the Asset Twin.

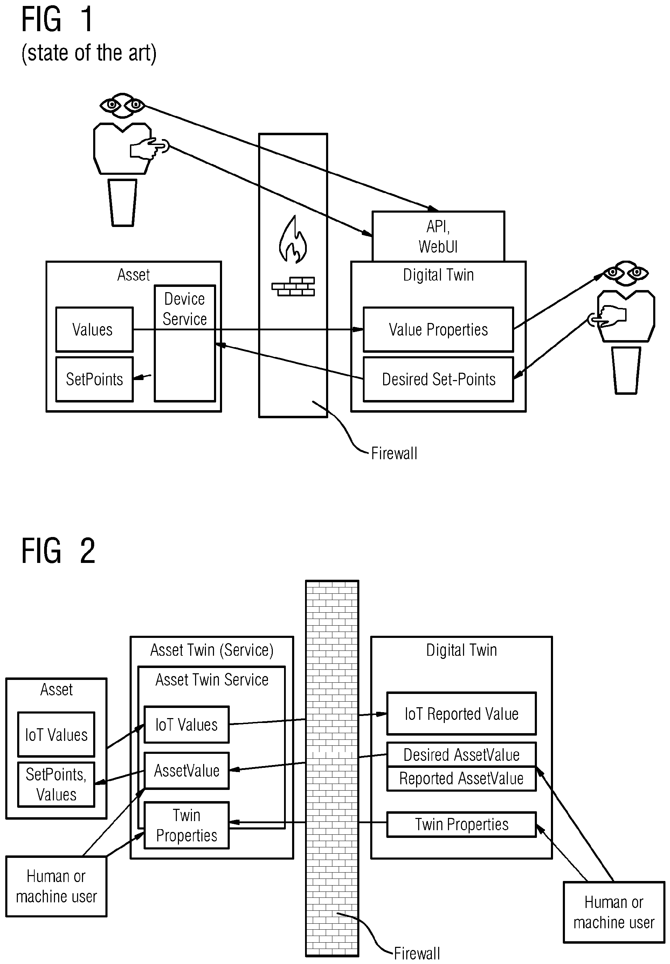

Fig. 1 explains the problem of current access to the Asset (e.g., a PLC on a shopfloor). Exactly one Digital Twin (shown on the right-handed side) has solely access to the Asset. Internal (shopfloor-based) and external users ("user" can in both cases be a human or a machine, e.g., an HMI panel) are both restricted to access via the Digital Twin and their access is limited by using authorization and authentication including a firewall. As already stated above, security usually limits what can and should be visible from the Asset side.

The connectivity between the Asset and the Digital Twin is usually provided because of IoT data flow requirements. Therefore, the firewall checks data traffic between source and destination. Access from browsers is usually inhibited.

Fig. 2 shows an abstracted view of an inventive system with the Asset (e.g., PLC or other industrial automation equipment) on a shopfloor or similar local industrial automation environment on the left-handed side and a public environment (e.g., a cloud, the Internet) with one or multiple Digital Twins of the Asset on the right-handed side. Although on the right-handed side only one Digital Twin is shown, in fact multiple Digital Twins can be coupled with one Asset. Advantageously, Digital Twins are each tailored to a limited number of functions, such as HMI, control parameter calculation, simulation, alarming, predictive maintenance, or others. The automation environment (shopfloor) and the public area (cloud, Internet) are separated by a firewall.

Both the Asset Twin and the Digital Twin can be accessed by the same or different human (administrators, common users) or machine users (e.g., other Assets, computers, HMI entities or the like). IoT ("Internet of Things") Values are properties of sensors, which are part of the Asset or connected to the Asset or other "read only" data of the Asset or the controlled process or automation environment. SetPoints or Values are process parameters stored in the Asset which influence the controlled process or automation entity. These parameters may be changed by internal software functions or external access, in particular by the Asset Twin. The Asset Values hold in the Asset Twin have a shadow (desired Asset Value, reported Asset Value) in the Digital Twin(s) and can be overwritten from the Digital Twin in form of a Value target (e.g., a temperature Value can be set to a desired temperature, and this target temperature can be reported to the Asset Twin, and the Asset Twin can create a new setpoint for the Asset for achieving the target temperature). Twin properties are internal parameters of each twin (Asset Twin, Digital Twin) and are part of the internal work of the twins; these can be accessed and changed from outside.

Various parameters like the twin properties or Asset Values (or desired Asset Values) can be accessed / changed from different sites (like local or remote users on the Asset Twin and the Digital Twin). Thus, concurring access has to be resolved by the Asset Twin (or an external service employed by the Asset Twin), in particular for quasi simultaneous conflicting write operations on the Asset and the Digital Twin (e.g. caused by communication latencies).

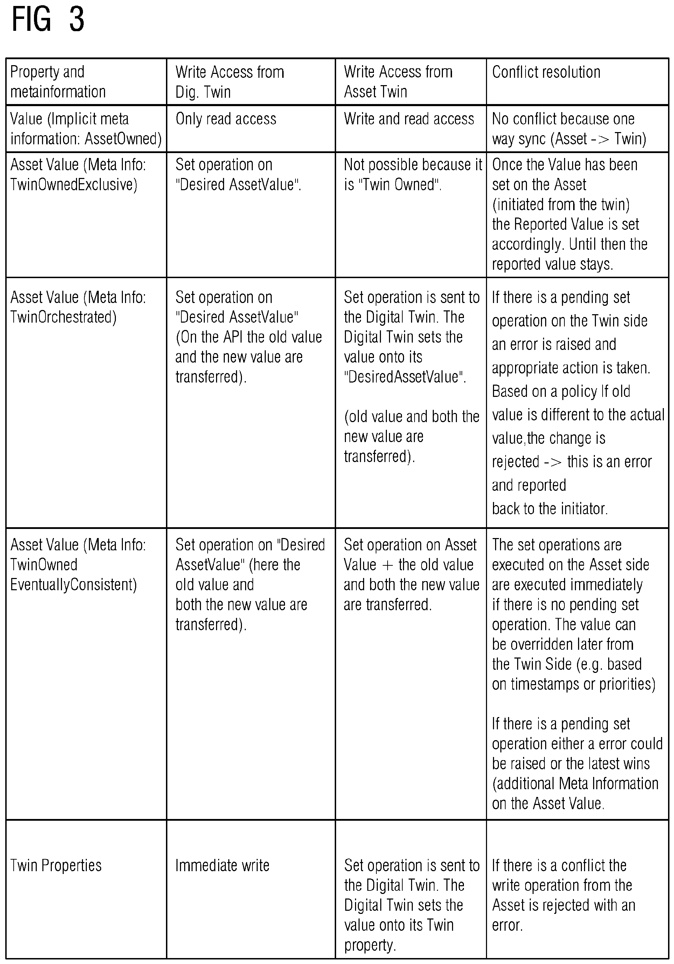

Fig. 3 shows a table with examples for conflict resolving rules. The first column denotes the affected parameter or function type ("Property"). The second and third column describes the origin of the access (Digital Twin or Asset Twin). The last column describes the conflict resolution rule. Parameters or other "topics" can be marked with meta information, helping for decisions in the course of access control and access conflict resolution. For example, in the third line the parameter type "Asset Value" has the meta information "twin orchestrated". That means the Asset Twin is responsible for changes to this type of parameter. Please note that definitions and meta information may not be applied to types of parameters, functions or other entities (in the table defined as "Property") only, but also can be defined for specific parameters. The table (or additional tables) can also contain information, which user (identity) or type of user (role) may access properties, and the table may also define the type of access rights; access right control is not shown in Fig. 3. In this respect, access right management can be related to human users and/or machine / computer access.

## Claims

1. A method for monitoring or controlling an Asset of an industrial automation environment,
wherein the Asset is communicatively coupled with at least one Digital Twin,
the Digital Twin receiving Value properties about values of the Asset and transmitting desired set points to the Asset,
**characterized in,**
**that** a bi-directional communication between the Asset and the at least one Digital Twin is at least partly routed via an Asset Twin,
the Asset Twin being a service located in the industrial automation environment,
the Asset Twin receiving Values from the Asset and forwarding these Values to the at least one Digital Twin, the Asset Twin receiving SetPoints or desired Values from the at least one Digital Twin, checking these SetPoints or desired Values for access rights and/or consistency with other Values, SetPoints and/or properties of the Asset, and applying these desired Values or SetPoints to the Asset.

2. The method according to claim 1,
**characterized in**
connecting multiple Digital Twins with the Asset via the common Asset Twin.

3. The method according to claim 2,
**characterized in**
setting up the multiple Digital Twins at least partly for each having different purposes or different facets.

4. The method according to one of the preceding claims, **characterized in**
establishing the at least one Digital Twin in an external environment, preferably a cloud, the Internet, company local Datacenters, or web servers,
the industrial automation environment being protected by a firewall in respect to the external environment.

5. The method according to one of preceding claims, **characterized in,**
**that** in case of concurring, conflicting or simultaneous access on both the Asset Twin and the at least one Digital Twin regarding the same Value, SetPoint, parameter or function of the Asset, the access via the Asset Twin is prioritized.

6. The method according to one of the preceding claims, **characterized in**
establishing a policy engine for or in the Asset Twin for rule-based access conflict resolution.

7. The method according to one of the preceding claims, **characterized in**
checking, by the Asset Twin, authorization of the at least one Digital Twin or other users or entities for permission of access to Values, SetPoints, parameters or functions of the Asset.

8. The method according to claim 7,
**characterized in**
controlling, by the Asset Twin, access via an access privilege protocol.

9. The method according to claim 8,
**characterized in**
the access privilege protocol being based on a user role definition.

10. The method according to claim 8 or 9,
**characterized in**
the access privilege protocol being based on a user or computer-based identity, the identity being connected with specific access rights.

11. The method according to one of preceding claims, **characterized in,**
**that** the Asset Twin directly accessing the Asset via an industrial communication protocol.

12. A system for monitoring or controlling an Asset of an
industrial automation environment,
wherein the Asset is communicatively coupled with at least one Digital Twin,
the Digital Twin being setup for receiving Value properties about Values of the Asset and transmitting desired set points to the Asset,
**characterized in**
a bi-directional communication channel between the Asset and the at least one Digital Twin, the communication channel being at least partly routed via an Asset Twin,
the Asset Twin being a service located in the industrial automation environment,
the Asset Twin being setup for receiving Values from the Asset and for forwarding these Values to the at least one Digital Twin,
the Asset Twin being setup for receiving SetPoints or desired Values from the at least one Digital Twin, for checking these SetPoints or desired Values for access rights and consistency with other Values, SetPoints and/or properties and/or functions of the Asset and being setup for applying these desired Values or SetPoints to the Asset.

13. The system according to claim 12,
**characterized in**
the at least one Digital Twin and the Asset Twin each having an interface for being accessed by a user and/or by a computer-based entity, the interface having write access to at least one Value, SetPoint, parameter or function of the Asset, the Asset Twin being setup for checking and coordinating concurring write access to the at least one Value, SetPoint, parameter or function of the Asset, in particular for quasi simultaneous conflicting write operations on the Asset and the Digital Twin (e.g. caused by communication latencies).
